# DEMANDE DE BREVET EUROPEEN

(11) **EP 1 942 452 A1**
(43) Date de publication de la demande: **09.07.2008**
(21) Numéro de dépôt: 07352007.4
(22) Date de dépôt: 18.12.2007
(51) Int. Cl.: G06Q 10/00

(54) **Plateforme de livraison comprenant des emplacements de livraison avec bornes d'identification**

(30) Priorité: 18.12.2006 FR 0611029
(71) Demandeur: So.Di.Gar, 31120 Roques (FR)
(72) Inventeur: Payraudeau, Pascal, 31100 Toulouse (FR)
(74) Mandataire: Cabinet BARRE LAFORGUE & associés

(57) **Abrégé**

L'invention concerne une plateforme de livraison, comprenant un entrepôt de stockage d'articles à livrer, un système informatique de gestion des livraisons, une zone de livraison comportant des emplacements de livraison, chaque emplacement de livraison étant accessible par au moins une voie carrossable et étant adapté pour recevoir un unique véhicule. Chaque emplacement de livraison comprend une borne d'identification (13) fixée inamovible à proximité immédiate de l'emplacement de livraison, reliée au système de gestion des livraisons et adaptée pour permettre la saisie de données numériques représentatives d'une commande d'article(s) à livrer établie et payée depuis un terminal de commande situé en dehors de la zone de livraison. Le système de gestion des livraisons comprend, pour chaque borne d'identification, des données numériques mémorisées, dites référence d'emplacement, identifiant cette borne d'identification. Le système de gestion des livraisons est adapté pour détecter la saisie de données sur une borne d'identification et associer la référence d'emplacement de cette borne à une commande correspondant aux données saisies. Chaque client est ainsi totalement libre de choisir l'emplacement de livraison où il souhaite recevoir sa commande.

## Description

L'invention concerne une plateforme de livraison. L'invention s'applique avantageusement à la grande distribution et donc aux plateformes de livraison des espaces de vente destinés au grand public, tels que les magasins de détail, les supermarchés, les hypermarchés... Elle s'applique également aux plateformes de livraison des espaces de vente des circuits de distribution restreints, destinés à des professionnels.

FR 2 802 789 décrit une plateforme de livraison comprenant :
- un entrepôt de stockage d'articles à distribuer,
- des bornes d'impression d'une liste des produits disponibles à la vente,
- des emplacements de stationnement de commande, chaque emplacement de commande comprenant une borne de commande pouvant être utilisée par un automobiliste depuis son véhicule, en vue d'établir une commande parmi la liste des produits disponibles à la vente,
- des emplacements de stationnement de livraison, ménagés en regard d'ouvertures de sortie de l'entrepôt (chaque ouverture desservant de préférence un seul emplacement de livraison), chaque emplacement étant repéré par un identificateur,
- une voie de circulation de véhicule entre les emplacements de commande et les emplacements de livraison.

Pour effectuer ses achats, un client se présente en voiture à une borne de commande, saisit les produits qu'il souhaite acheter et valide sa commande. Un numéro de référence et un emplacement de livraison sont alors alloués à la commande, et cette dernière est affectée à un couple d'opérateurs (à savoir un préparateur et un livreur). La borne de commande imprime et délivre ensuite un ticket de validation indiquant le montant total de la commande, le numéro de référence de celle-ci et l'emplacement de livraison vers lequel le client doit se diriger. Le client règle le montant de la commande puis déplace son véhicule depuis la borne de commande jusqu'à l'emplacement de livraison qui lui a été alloué. Lorsque la commande est prête, le livreur affecté à cette dernière vérifie que la commande a bien été réglée, puis apporte les produits commandés à l'emplacement de livraison alloué. Il vérifie que le numéro de référence imprimé sur le ticket que lui tend le client correspond au numéro de la commande qu'il apporte, puis charge ladite commande dans le véhicule du client.

WO 2006/126996 décrit un procédé de gestion d'un complexe de vente, lequel complexe comprend au moins une voie d'attente, une pluralité de stations de commande et une pluralité de stations de livraison. A son arrivée sur le site, le client indique l'objet de sa visite au niveau de la voie d'attente. S'il n'a pas encore passé commande, il est dirigé vers une station de commande en vue de l'enregistrement d'une commande, puis vers une station de livraison prédéterminée en vue du retrait de ladite commande. S'il a préalablement passé commande à l'aide d'un outil de communication distant, le client est dirigé vers une station de commande en vue de son identification et du paiement de sa commande, puis vers une station de livraison prédéterminée en vue du retrait de la commande. Dans tous les cas, le lien entre le client et sa commande est établi au niveau d'une station de commande et le client est invité à se rendre à la station de livraison que lui attribue le système de gestion de façon à réguler les flux de circulation au sein du complexe.

En variante, le complexe comprend au moins une voie d'attente et une pluralité de stations de commande et de livraison (résultant chacune d'une combinaison d'une station de commande et d'une station de livraison précédemment définies). A son arrivée sur le site, le client s'engage sur une voie d'attente, d'où il est dirigé vers la station de commande et de livraison disponible la plus proche. A cette station de commande et de livraison, le client saisie et paie sa commande. S'il a préalablement passé commande à l'aide d'un outil de communication distant, le client est invité à payer sa commande à la station de commande et de livraison. Dans tous les cas, le client est donc dirigé, à son arrivée sur le site, vers une station de commande et de livraison que le système de gestion lui attribue de façon à réguler les flux de circulation au sein du complexe.

WO 02/25516 décrit un complexe de vente au détail comprenant un système de commande permettant à un client de passer une commande, au moins un entrepôt de stockage d'articles, une pluralité d'infrastructures de livraison distantes de l'entrepôt de stockage, auprès desquelles le client peut retirer sa commande à bord de son véhicule. Chaque infrastructure de livraison comprend un poste d'identification à l'entrée de l'infrastructure, une pluralité de stations de livraison, un système d'attribution des stations de livraison et une pluralité de stations de paiement. Lorsqu'un client arrive à l'infrastructure de livraison, il fournit au poste d'identification un identifiant permettant de l'identifier. Le système lui attribue alors une station de livraison, dont la référence (numéro d'emplacement) lui est communiquée par le poste d'identification et où il peut retirer sa commande.

Ainsi, dans toutes les plateformes de livraison connues, l'attention du client est sollicitée : il lui est demandé de prendre connaissance d'une information lui permettant de connaître l'emplacement de livraison qui est alloué à sa commande, et de stationner son véhicule précisément à cet emplacement. Le fonctionnement d'un tel système repose donc sur la capacité de chaque client à recevoir et à comprendre cette information puis à retrouver l'emplacement concerné parmi une pluralité (qui peut être nombreuse) d'emplacements existants.

Les inventeurs ont déterminé que ce fonctionnement ne pouvait que conduire à de fréquents dysfonctionnements (résultant d'une incompréhension totale ou d'une erreur d'appréciation d'un client le conduisant à un emplacement de livraison erroné), qui retardent les livraisons et exigent des moyens techniques et humains additionnels en vue de réorienter les clients égarés vers leur emplacement de livraison.

L'invention vise à pallier ces inconvénients, en proposant une plateforme de livraison et un procédé de livraison plus fiables, dans lesquels la contribution qui est exigée des clients est limitée, et qui permettent des livraisons rapides et sans risque d'erreur.

Un autre objectif de l'invention est de proposer une plateforme de livraison au fonctionnement simple et aux charges d'exploitation limitées.

Un autre objectif de l'invention est d'offrir la possibilité de mettre en oeuvre des modes d'identification divers des clients venant retirer une commande d'articles à livrer.

L'invention vise également à atteindre tous ces objectifs à moindre coût, en proposant une plateforme et un procédé de livraison peu coûteux.

Pour ce faire, l'invention concerne une plateforme de livraison d'articles à des clients utilisant un véhicule, comprenant :
- un entrepôt de stockage dans lequel sont stockés des articles à livrer,
- un système informatique de gestion des livraisons,
- une zone de livraison comprenant des emplacements de livraison, chaque emplacement de livraison étant accessible par au moins une voie carrossable et étant adapté pour recevoir un unique véhicule, chaque emplacement de livraison étant aménagé à proximité d'une issue de l'entrepôt de façon à permettre, via cette issue, la livraison d'une commande d'article(s) à livrer dans un véhicule stationné sur l'emplacement de livraison, chaque emplacement de livraison comprenant une borne d'identification fixée inamovible à proximité immédiate de l'emplacement de livraison et reliée au système de gestion des livraisons.

La plateforme de livraison selon l'invention est caractérisée en ce que :
- le système de gestion des livraisons est adapté pour pouvoir activer et désactiver chaque borne d'identification,
- chaque borne d'identification est adaptée pour permettre, lorsqu'elle est active, la saisie de données numériques, dites données saisies, représentatives d'une commande d'article(s) à livrer préalablement saisie sur un terminal de commande situé en dehors de la zone de livraison et préalablement payée à l'aide de moyens de paiement situés en dehors de la zone de livraison,
- le système de gestion des livraisons comprend, pour chaque borne d'identification, des données numériques mémorisées, dites référence d'emplacement, identifiant cette borne d'identification et donc l'emplacement de livraison correspondant,
- le système de gestion des livraisons est adapté pour détecter la saisie de données saisies sur une borne d'identification active, et associer la référence d'emplacement de cette borne d'identification à une commande d'article(s) à livrer correspondant auxdites données saisies.

L'invention concerne également un procédé de livraison d'articles à des clients utilisant un véhicule, dans lequel :
- on stocke des articles à livrer dans un entrepôt,
- on utilise un système informatique de gestion des livraisons,
- on utilise une zone de livraison comprenant des emplacements de livraison, chaque emplacement de livraison étant accessible par au moins une voie carrossable et étant adapté pour recevoir un unique véhicule, chaque emplacement de livraison étant aménagé à proximité d'une issue de l'entrepôt de façon à permettre, via cette issue, la livraison d'une commande d'article(s) à livrer dans un véhicule stationné sur l'emplacement de livraison,
- on équipe chaque emplacement de livraison d'une borne d'identification, fixée inamovible à proximité immédiate de l'emplacement de livraison et reliée au système de gestion des livraisons.

Le procédé de livraison selon l'invention est caractérisé en ce que :
- pour chaque borne d'identification, on mémorise, dans le système de gestion des livraisons, des données numériques, dites référence d'emplacement, identifiant cette borne d'identification et donc l'emplacement de livraison correspondant,
- on active la totalité ou une partie des bornes d'identification, le système de gestion des livraisons étant adapté pour pouvoir activer et désactiver chaque borne d'identification,
- chaque borne d'identification implantée est adaptée pour permettre la saisie de données numériques, dites données saisies, représentatives d'une commande d'article(s) à livrer préalablement saisie sur un terminal de commande situé en dehors de la zone de livraison et préalablement payée à l'aide de moyens de paiement situés en dehors de la zone de livraison,
- on autorise chaque client à accéder à l'un quelconque des emplacements de livraison dont les bornes d'identification sont actives,
- lorsque des données saisies sont saisies sur une borne d'identification active, le système de gestion des livraisons détecte cette saisie et associe la référence d'emplacement de cette borne d'identification à une commande d'article(s) à livrer correspondant auxdites données saisies. Il est à noter que cette association peut donner lieu à la mémorisation de données numériques réalisant un lien informatique entre la référence d'emplacement et la commande enregistrée ; en variante, elle peut simplement être matérialisée par l'affichage simultané, sur un écran de visualisation de l'entrepôt, de la référence d'emplacement et de données permettant d'identifier la commande (code de commande défini plus loin par exemple, ou liste des articles commandés).

Selon l'invention et contrairement à l'enseignement de FR 2 802 789, WO 2006/126996 et WO 02/25516, pour se faire livrer les articles qu'il a commandés, un client peut se présenter à l'un quelconque des emplacements de livraison de la plateforme de livraison selon l'invention. Le client n'est en aucun cas guidé vers un emplacement que lui aurait attribué le système de gestion des livraisons en fonction du trafic ; le système de gestion des livraisons selon l'invention n'est de préférence d'ailleurs pas adapté pour ce faire. Le client n'est pas mis à contribution pour repérer un emplacement précis et s'y garer ; il est totalement libre de choisir n'importe quel emplacement de livraison, y compris un emplacement actuellement non disponible (mais qu'il estime par exemple susceptible de se libérer rapidement). Une fois garé à l'un de ces emplacements, il est identifié à l'aide de données représentatives de sa commande, saisies sur la borne d'identification dudit emplacement. Comme expliqué plus loin, la saisie de ces données peut résulter d'une action du client ou être déclenchée automatiquement par son arrivée sur l'emplacement de livraison. Le système de gestion des livraisons (auquel chaque borne d'indentification est reliée) détecte cette saisie et associe immédiatement la référence d'emplacement de ladite borne d'identification à la commande du client (par l'intermédiaire desdites données saisies). Pour cette commande, le personnel de l'entrepôt est ainsi averti de l'arrivée du client et de l'emplacement de livraison qu'il a choisi. Un livreur peut alors apporter les articles commandés au client.

L'invention permet ainsi d'éviter toute erreur de livraison de commande, d'optimiser le temps de chargement des commandes dans les véhicules des clients, et donc de réduire le nombre de personnes et/ou le nombre d'emplacements de livraison nécessaires pour un volume de commandes quotidien donné. Contre toute attente, alors que toutes les plateformes de livraison connues mettent en oeuvre des moyens complexes de contrôle du trafic et de guidage des clients afin de réguler le trafic au sein de la plateforme, l'invention permet également, en prenant le parti de supprimer ces moyens, de fluidifier le trafic au sein de la plateforme et de réduire les temps d'attente de livraison.

A noter que le système de gestion des livraisons est adapté pour pouvoir activer et désactiver chaque borne d'identification dans le seul objectif de limiter les risques de dégradation et de dysfonctionnement des bornes d'identification, en neutralisant les moyens de saisie desdites bornes en dehors des horaires d'ouverture de la plateforme de livraison, et éventuellement en limitant le nombre de bornes actives aux heures de faible affluence. En aucun cas, cette propriété du système de gestion des livraisons n'est utilisée pour guider un client vers un emplacement et une borne d'identification prédéterminés, par neutralisation des autres bornes.

A noter par ailleurs que la zone de livraison selon l'invention peut être regroupée (les emplacements de livraison étant tous agencés les uns à côté de autres) ou au contraire morcelée, éclatée en plusieurs secteurs autour de l'entrepôt.

Avantageusement et selon l'invention, chaque borne d'identification est dépourvue de moyens de saisie de commandes et de moyens de paiement de commandes.

Avantageusement et selon l'invention :
- le système de gestion des livraisons est adapté pour mémoriser, pour chaque commande d'article(s) à livrer, des données numériques, dites code de commande, identifiant cette commande (dans le procédé selon l'invention, pour chaque commande d'article(s) à livrer, le système de gestion des livraisons mémorise un tel code de commande),
- le système de gestion des livraisons est adapté pour associer la référence d'emplacement d'une borne d'identification où des données saisies ont été saisies, au code de commande de la commande d'article(s) à livrer correspondant auxdites données saisies (dans le procédé selon l'invention, le système de gestion des livraisons associe ladite référence d'emplacement audit code de commande).

Avantageusement et selon l'invention, dans un premier mode de réalisation :
- chaque borne d'identification est adaptée pour permettre la saisie d'un code de commande à titre de données saisies,
- le système de gestion des livraisons est adapté pour reconnaître un code de commande saisi sur une borne d'identification. Comme précédemment défini, le système de gestion des livraisons peut alors faire le lien entre la référence d'emplacement de ladite borne d'identification et la commande identifiée par son code de commande.

Dans ce premier mode de réalisation, un client stationnant à un emplacement de livraison peut s'identifier auprès de l'entrepôt (c'est-à-dire fournir à l'entrepôt une information permettant d'identifier la commande qui lui est destinée) en saisissant le code de commande de sa commande, qui lui a par exemple été communiqué lors de l'enregistrement de sa commande.

En variante ou -de préférence- en combinaison, dans un deuxième mode de réalisation :
- le système de gestion des livraisons comprend au moins une série, dite code client, de données numériques mémorisées identifiant un client, (dans le procédé selon l'invention, on mémorise, dans le système de gestion des livraisons, au moins une série, dite code client, de données numériques identifiant un client)
- le système de gestion des livraisons est adapté pour associer chaque code client d'un client à une commande enregistrée pour le client, (dans le procédé selon l'invention, pour chaque commande enregistrée pour un client, le système de gestion de livraisons associe chaque code client dudit client à ladite commande)
- chaque borne d'identification est adaptée pour permettre la saisie d'un code client à titre de données saisies, et le système de gestion des livraisons est adapté pour reconnaître un code client saisi sur une borne d'identification. Comme précédemment défini, le système de gestion des livraisons peut alors faire le lien entre la référence d'emplacement de ladite borne d'identification et la commande du client retrouvée par l'intermédiaire du code client saisi.

Dans ce deuxième mode de réalisation, la commande à livrer à un client, dont le véhicule est stationné sur un emplacement de livraison et pour lequel au moins un code client est mémorisé dans le système de gestion des livraisons, peut être identifiée à l'aide dudit code client, saisi sur la borne d'identification à titre de données saisies. Ce code client peut être : un code associé à une carte de fidélité délivrée audit client par la plateforme de livraison, le numéro d'identité du client apparaissant sur sa carte d'identité ou sur son passeport, le numéro (ou une partie du numéro) d'une carte bancaire du client, le numéro d'immatriculation de son véhicule, son empreinte digitale... Selon les cas, la saisie d'un code client à la borne d'identification suppose une action du client (exposition d'une carte -de fidélité, d'identité, bancaire, d'immatriculation- à un lecteur de cartes, application du doigt sur un lecteur optique...) ou est automatique (lecture de la plaque d'immatriculation du véhicule stationné sur l'emplacement de livraison, la borne d'identification et/ou le système de gestion des livraisons disposant pour ce faire d'une caméra et d'un système de reconnaissance d'images).

Avantageusement et selon l'invention, chaque borne d'identification comprend au moins un dispositif de saisie de données numériques choisi parmi un lecteur optique de codes et/ou de texte et/ou de graphismes (et par exemple un lecteur optique de codes à barres), un lecteur de cartes magnétiques, un lecteur de cartes à puce, un clavier, un écran tactile, un interphone, une caméra, un appareil photo, un outil de reconnaissance biométrique...

Avantageusement et selon l'invention, la plateforme de livraison selon l'invention comprend au moins un terminal de commande, situé en dehors de la zone de livraison, relié au système de gestion des livraisons et adapté pour être utilisé par un client ou par une personne de la plateforme de livraison pour saisir une commande d'article(s) à livrer. A noter que le système de gestion des livraisons est de préférence adapté pour mémoriser un code de commande pour chaque commande d'article(s) à livrer saisie à un terminal de commande. Les terminaux de commande peuvent prendre des formes diverses.

Ainsi par exemple, la plateforme de livraison comprend :
- des emplacements de commande situés en dehors de la zone de livraison, chaque emplacement de commande étant accessible par au moins une voie carrossable et étant adapté pour recevoir un unique véhicule, chaque emplacement de commande comprenant un terminal de commande formé d'une borne de commande, dite borne de commande à véhicule, adaptée pour être utilisée par un client à bord d'un véhicule stationné sur l'emplacement de commande ; une telle borne de commande à véhicule peut être installée dans une zone dite zone d'accueil de la plateforme de livraison (laquelle zone d'accueil comprend notamment l'entrepôt, la zone de livraison et la ou les voies d'accès aux emplacements de livraison, précédemment définis), mais en dehors de la zone de livraison ; en variante, une telle borne de commande à véhicule peut être installée à distance de cette zone d'accueil, dans un lieu accessible au public -à véhicule-(zone commerciale, parc de stationnement, domaine public tel qu'une place, une rue..., etc.) ou accessible à une sélection de clients ;
- au moins une voie carrossable adaptée pour permettre l'accès par des véhicules à chaque emplacement de livraison à partir de l'un quelconque des emplacements de commande localisés dans la zone d'accueil de la plateforme de livraison. A noter qu'une seule et même voie peut permettre de relier l'ensemble de ces emplacements de commande (ces emplacements étant réunis dans une seule et même zone, dite zone de commande), à l'ensemble des emplacements de livraison. A l'inverse, la plateforme de livraison peut comprendre plusieurs voies, chaque voie reliant un ou plusieurs emplacements de commande à un ou plusieurs emplacements de livraison. L'ensemble de ces voies fait partie de la zone d'accueil de la plateforme de livraison.

En variante ou -de préférence- en combinaison, la plateforme de livraison selon l'invention comprend au moins un terminal de commande formé d'une borne, dite borne de commande à pied, installée dans un lieu accessible à pied par des clients, en dehors de la zone de livraison. Une telle borne de commande à pied peut être installée dans la zone d'accueil de la plateforme de livraison (à proximité de l'entrepôt mais en dehors de la zone de livraison) ou à distance de cette zone d'accueil, dans un lieu accessible au public -à pied- (galerie marchande, autre établissement recevant du public tel qu'une administration, un hôpital, un musée..., zone commerciale, parc de stationnement, domaine public tel qu'une place, une rue..., etc.) ou accessible à une sélection de clients.

En variante ou -de préférence- en combinaison, la plateforme de livraison comprend un local, dit magasin, accessible à des clients et dans lequel des articles sont stockés de façon à être exposés aux clients, ledit magasin comprenant au moins un terminal de caisse relié au système de gestion des livraisons et doté de moyens de saisie d'une commande d'article(s) à livrer pour un client de sorte que ce terminal de caisse constitue un terminal de commande. A noter que le magasin est de préférence aménagé dans la zone d'accueil de la plateforme de livraison. En d'autres termes, le magasin, l'entrepôt, la zone de livraison (et le cas échéant la zone de commande) sont regroupés dans un seul et même lieu. Cependant, il n'est pas exclu que le magasin soit aménagé à distance de la zone d'accueil de la plateforme de livraison (autrement dit, la plateforme de livraison est éclatée en plusieurs lieux). Dans le cas où le magasin est situé dans la zone d'accueil, la plateforme de livraison comprend au moins une voie carrossable entre au moins une zone de stationnement à proximité du magasin et chaque emplacement de livraison. Comme précédemment expliqué, une ou plusieurs voies peuvent être prévues pour relier chaque zone de stationnement du magasin aux emplacements de livraison, et chacune de ces voies fait partie de la zone d'accueil.

Peut également réaliser un terminal de commande, un ordinateur personnel d'un client, relié à un réseau de communication public -tel qu'Internet- ou privé adapté pour communiquer avec le système de gestion des livraisons de la plateforme de livraison. La plateforme de livraison dispose dans ce cas d'un site internet ou intranet, dit site de commande, permettant d'établir une commande d'article(s) à livrer depuis tout ordinateur personnel relié audit réseau de communication. A noter que ledit ordinateur personnel n'est pas considéré comme appartenant à la plateforme de livraison, y compris lorsqu'il est connecté au réseau de communication et qu'il est relié au système de gestion des livraisons.

Avantageusement et selon l'invention, dans le cas où le système de gestion des livraisons est adapté pour mémoriser un code de commande pour chaque commande, chaque terminal de commande de la plateforme de livraison comprend des moyens d'impression de tickets, adaptés pour imprimer, pour chaque commande saisie audit terminal de commande, un ticket de commande sur lequel apparaît au moins le code de commande correspondant. Ce ticket de commande est destiné au client. De préférence, lesdits moyens d'impression sont adaptés pour imprimer chaque code de commande sous la forme d'un code à lecture optique, et chaque borne d'identification est dotée d'un lecteur optique apte à lire un tel code à lecture optique. De préférence, chaque code de commande est imprimé sous la forme d'un code à barres et le lecteur optique de chaque borne est un lecteur de codes à barres. Lorsqu'il vient retirer les articles commandés, le client s'identifie auprès d'une borne d'identification en présentant, devant le lecteur optique de ladite borne, le code imprimé sur son ticket de commande.

Avantageusement et selon l'invention :
- comme précédemment défini, le système de gestion des livraisons comprend au moins une série, dite code client, de données numériques mémorisées identifiant un client,
- chaque terminal de commande de la plateforme de livraison est adapté pour permettre la saisie d'un code client lors de la saisie d'une commande d'article(s) à livrer, en vue de permettre d'identifier le client passant ladite commande ; par exemple, chaque terminal de commande comprend un lecteur de cartes ; en particulier, chaque terminal de commande comprend un lecteur de cartes de fidélité (lesquelles cartes de fidélité sont délivrées par la plateforme de livraison). Chaque lecteur de cartes de fidélité peut être : un lecteur magnétique de cartes si les cartes de fidélité de la plateforme de livraison sont des cartes à bande magnétique, un lecteur de puces électroniques si les cartes de fidélité sont des cartes à puce, un lecteur optique de codes à barres (ou autres codes à lecture optique) si un tel code à barres est imprimé sur chaque carte de fidélité, etc. ;
- le système de gestion des livraisons est adapté pour reconnaître un code client saisi à un terminal de commande et pour associer chaque code client du client ainsi identifié à une commande enregistrée pour ce client audit terminal de commande.

De préférence, chaque borne d'identification comprend des moyens de saisie de codes client, identiques à ceux des terminaux de commande. Par exemple, chaque borne d'identification comprend un lecteur de cartes et notamment un lecteur de cartes de fidélité. Si ce dernier est un lecteur optique de codes à barres (ou autres codes à lecture optique), chaque borne d'identification comprend de préférence un unique lecteur optique de codes à barres qui permet de saisir, non seulement un code de commande imprimé sur un ticket de commande, mais aussi le code client d'une carte de fidélité.

Avantageusement et selon l'invention :
- chaque terminal de commande de la plateforme de livraison comprend un lecteur de cartes,
- le système de gestion des livraisons est adapté pour mémoriser, en association avec une commande, un code lu sur une carte par le lecteur de cartes d'un terminal de commande (il peut s'agir d'un code client préalablement mémorisé dans le système de gestion des livraisons ou, au contraire, d'un code inconnu dudit système),
- chaque borne d'identification est dotée d'un lecteur de cartes compatibles avec le lecteur de cartes de chaque terminal de commande. Lorsqu'il vient retirer les articles commandés, le client s'identifie auprès de la borne d'identification de l'emplacement de livraison qu'il a choisi, en exposant sa carte (celle qu'il a préalablement présentée au terminal de commande) au lecteur de cartes de ladite borne.

Par exemple, chaque terminal de commande de la plateforme de livraison et chaque borne d'identification comprennent un lecteur de cartes bancaires, et le système de gestion des livraisons est adapté pour mémoriser au moins une partie du numéro de la carte bancaire d'un client, en association avec une commande enregistrée pour ce client. A noter que, selon l'invention, le lecteur de cartes bancaires des bornes d'identification n'est utilisé qu'à des fins d'identification et n'est de préférence jamais utilisé pour réaliser un paiement ; il ne constitue donc pas des moyens de paiement de commandes.

Pour chaque commande saisie par le client sur son ordinateur personnel (si toutefois la plateforme de livraison offre cette possibilité), dans le cas où le système de gestion des livraisons mémorise un code de commande pour chaque commande enregistrée, le système de gestion des livraisons est adapté pour envoyer le code de commande au client à la fois sous la forme de chiffres arabes et sous la forme d'un code à barres, directement sur le site de commande de la plateforme de livraison ou par l'intermédiaire d'un courrier électronique envoyé à une adresse électronique du client. Si le client dispose d'une imprimante personnelle, il est invité à imprimer le code transmis (au moins sous sa forme de code à barres) et à s'identifier auprès d'une borne d'identification en présentant ledit code à barres devant le lecteur optique de la borne. S'il ne dispose pas d'imprimante, il est invité à noter le code transmis sous la forme de chiffres arabes et à composer ce code sur un clavier ou un écran tactile de la borne d'identification.

En variante, pour chaque commande saisie depuis son ordinateur personnel, le client est invité à saisir (par exemple à l'aide du clavier de son ordinateur), au moment de sa commande, un code associé à une carte (carte de fidélité, carte bancaire...) lui appartenant. Ce code est soit mémorisé par le système de gestion des livraisons en association avec la commande du client, soit reconnu par le système de gestion des livraisons en tant que code client (s'il avait été précédemment mémorisé dans le système). Lorsqu'il vient retirer sa commande auprès de l'entrepôt, le client expose sa carte au lecteur de cartes d'une borne d'identification.

En variante, le système de gestion des livraisons est adapté pour identifier l'ordinateur personnel d'un client connecté sur le site de commande de la plate forme de livraison ; cette identification s'effectue de façon traditionnelle à l'aide d'un fichier (dit "cookie") enregistré dans l'ordinateur lors d'une première utilisation du site de commande. Le système de gestion des livraisons est par ailleurs adapté pour mémoriser des codes client (comme précédemment défini) et pour associer, à chaque commande saisie à cet ordinateur, chaque code client mémorisé pour ce client. Lorsqu'il vient retirer les articles commandés, le client est identifié par l'entrepôt grâce à une carte de fidélité, sa carte d'identité, l'immatriculation de sa voiture, etc. (selon les codes client mémorisés).

Avantageusement et selon l'invention, dans le cas où le système de gestion des livraisons mémorise un code de commande pour chaque commande enregistrée :
- chaque terminal de commande est adapté pour permettre la saisie d'un numéro de téléphone mobile lors de la saisie d'une commande d'article(s) à livrer,
- le système de gestion des livraisons est adapté pour mémoriser ledit numéro de téléphone mobile en association avec le code de commande de ladite commande, puis pour envoyer à ce numéro de téléphone mobile un message téléphonique comprenant ledit code de commande.

En variante ou en combinaison :
- comme précédemment défini, le système de gestion des livraisons comprend d'une part au moins une série, dite code client, de données numériques mémorisées identifiant un client,
- le système de gestion des livraisons comprend d'autre part des moyens de mémorisation, en association avec chaque code client, d'un numéro de téléphone mobile du client,
- comme précédemment défini, chaque terminal de commande est adapté pour permettre la saisie d'un code client lors de la saisie d'une commande d'article(s) à livrer, en vue de permettre d'identifier le client passant ladite commande,
- le système de gestion des livraisons est adapté pour envoyer, au numéro de téléphone mobile du client identifié, un message téléphonique comprenant le code de commande de ladite commande.

Dans les deux cas, le système de gestion des livraisons est de préférence adapté pour envoyer un message téléphonique de type multimédia (MMS par exemple) dans lequel le code de commande apparaît sous la forme d'un code à lecture optique (tel qu'un code à barres), et chaque borne d'identification est dotée d'un lecteur optique de tels codes à lecture optique (tel qu'un lecteur optique de codes à barres). Pour pouvoir se faire livrer ses articles, le client s'identifie auprès d'une borne d'identification en présentant, devant le lecteur optique de ladite borne, le code apparaissant sur l'écran de son téléphone mobile.

Avantageusement et selon l'invention :
- chaque terminal de commande de la plateforme de livraison comprend un écran d'affichage,
- comme précédemment défini, le système de gestion des livraisons comprend au moins une série, dite code client, de données numériques mémorisées identifiant un client, et chaque terminal de commande de la plateforme de livraison est adapté pour permettre la saisie d'un code client lors de la saisie d'une commande d'article(s) à livrer, en vue de permettre d'identifier le client passant ladite commande,
- le système de gestion des livraisons comprend :
   ■ des moyens de mémorisation, en association avec chaque code client correspondant, de données numériques représentatives des différents articles à livrer de chaque commande saisie pour un client identifié,
   ■ des moyens de génération automatique, de mémorisation et de mise à jour, pour chaque client identifié, d'une liste d'articles, dits articles préférés du client, en fonction des articles précédemment livrés au client et de leur fréquence de livraison,
   ■ des moyens d'affichage de la liste d'articles préférés d'un client sur l'écran d'un terminal de commande où ce client est identifié.

De même, pour une commande saisie par un client sur son ordinateur personnel, le système de gestion des livraisons est adapté pour permettre d'afficher, sur l'écran de l'ordinateur, la liste des articles préférés du client si ce dernier a été identifié (soit à l'aide d'un cookie préalablement enregistré dans l'ordinateur, soit parce que le client a saisi un code client).

L'affichage de cette liste d'articles préférés sur l'écran du terminal de commande permet, d'une part de rappeler au client les articles qu'il a coutume d'acheter pour lui éviter tout oubli, et d'autre part d'accélérer la saisie par le client de sa commande (en lui permettant d'ajouter directement à sa commande un article de la liste).

Avantageusement et selon l'invention :
- le système de gestion des livraisons est un système d'encaissement adapté pour permettre l'enregistrement et le paiement d'articles,
- au moins un terminal de commande, et de préférence chaque terminal de commande -notamment de la plateforme de livraison-, comprend des moyens d'encaissement permettant de recevoir et d'enregistrer, pour chaque commande saisie audit terminal de commande, un paiement correspondant à un montant d'achat des articles de cette commande ; le cas échéant, à cette fin, le système de gestion des livraisons est adapté pour offrir un service sécurisé de paiement par carte bancaire sur le site de commande de la plateforme de livraison, pour chaque commande saisie par un client depuis un ordinateur personnel,
- de préférence, le système de gestion des livraisons est adapté pour n'attribuer un code de commande à une commande saisie à un terminal de commande qu'après enregistrement d'un paiement correspondant audit terminal de commande.

Avantageusement et selon l'invention, le système de gestion des livraisons est adapté pour communiquer chaque code de commande et/ou une liste comprenant chaque article composant la commande correspondante à au moins un terminal, dit terminal de préparation de commande, rattaché à l'entrepôt. Le terme "rattaché" signifie que le terminal de préparation de commande est localisé dans l'entrepôt s'il s'agit d'un terminal fixe, ou qu'il est affecté à l'entrepôt s'il s'agit d'un terminal portatif mobile. La plateforme de livraison comprend de préférence au moins un terminal de préparation de commande portatif, adapté pour pouvoir être porté par un préparateur de commande ou par un chariot.

Avantageusement et selon l'invention, l'entrepôt présente une seule issue desservant tous les emplacements de livraison de la plateforme de livraison. L'invention permettant de déterminer la commande à livrer à un véhicule stationnant sur l'un quelconque des emplacements de livraison, il n'est en effet pas nécessaire, contrairement à l'enseignement de FR 2 802 789, de prévoir une issue par emplacement de livraison. L'entrepôt selon l'invention est ainsi moins coûteux à réaliser et à entretenir.

L'invention concerne également une plateforme de livraison et un procédé de livraison caractérisés en combinaison par tout ou partie des caractéristiques mentionnées ci-dessus et ci-après.

D'autres buts, caractéristiques et avantages de l'invention apparaîtront à la lecture de la description suivante qui se réfère aux figures annexées représentant un mode de réalisation préférentiel de l'invention, donné uniquement à titre d'exemple non limitatif.

La figure 1 est un plan de masse schématique de la zone d'accueil d'une plateforme de livraison selon l'invention.

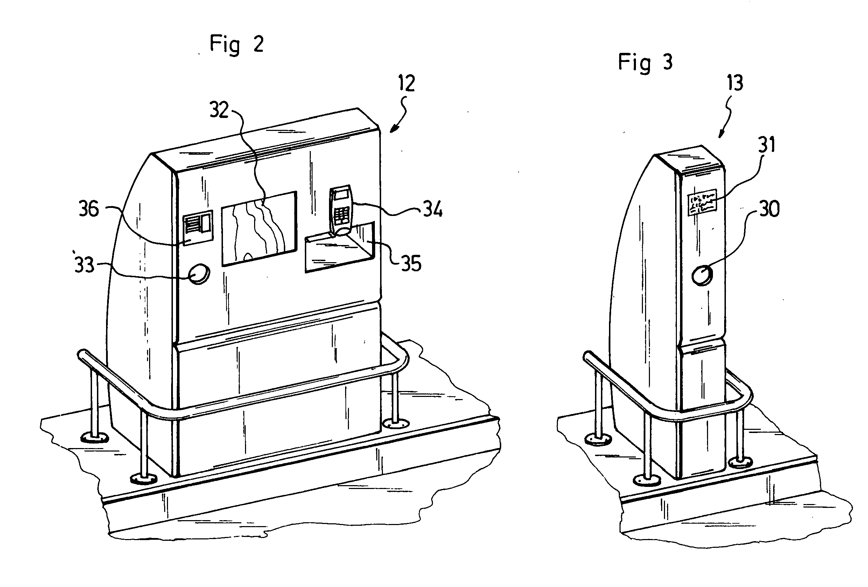

La figure 2 est une vue schématique en perspective d'une borne de commande d'une plateforme de livraison selon l'invention.

La figure 3 est une vue schématique en perspective d'une borne d'identification d'une plateforme de livraison selon l'invention.

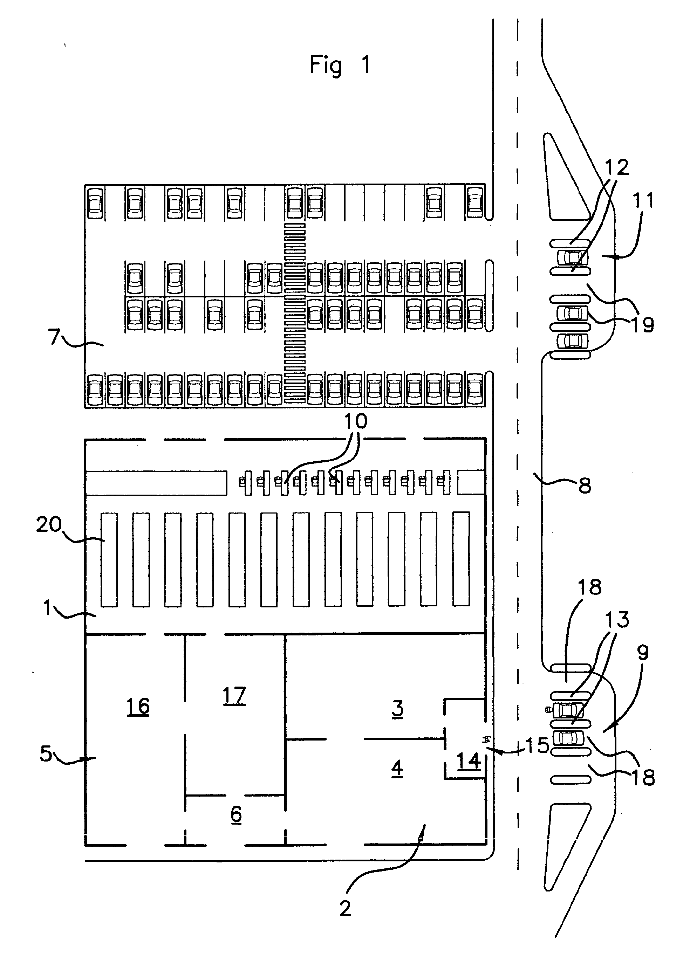

La plateforme de livraison selon l'invention comprend, dans sa zone d'accueil illustrée à la figure 1, un entrepôt comportant notamment une réserve 2 d'articles à livrer. La réserve 2 est réservée au stockage d'articles à livrer. Elle comprend, d'une part, un local 4 à température ambiante, dans lequel sont stockés des articles à livrer, dits articles non frais à livrer, pouvant être conservés à température ambiante. Elle comprend d'autre part un local 3 réfrigéré, dans lequel sont stockés des articles frais à livrer devant être stockés à basse température (quelques degrés Celsius) et des articles surgelés à livrer devant être stockés à très basse température (entre -5°C et -18°C). Dans une variante préférée non illustrée, la réserve d'articles à livrer comprend au moins trois locaux : un local à température ambiante, un local réfrigéré pour le stockage des articles frais à livrer, et un autre local réfrigéré pour le stockage des articles surgelés à livrer. La réserve 2 comprend également une zone 14 de préparation des livraisons, qui communique à la fois avec le local réfrigéré 3 et avec le local à température ambiante 4. Cette zone 14 est utilisée pour préparer les livraisons ; des opérateurs (par exemple les livreurs) y regroupent, pour chaque commande, les articles issus du local réfrigéré 3 et ceux issus du local à température ambiante 4.

La zone 14 de préparation des livraisons s'ouvre, par une large issue 15, sur une zone extérieure 9 dite zone de livraison, comprenant des emplacements de stationnement 18, dits emplacement de livraison, réservés aux clients venus retirer leur commande. Ces emplacements de livraison sont accessibles par une voie 8 de circulation de véhicule. En l'exemple illustré, la zone de livraison est constituée d'un unique secteur, desservi par une seule issue de l'entrepôt. Mais il n'est pas exclu qu'une zone de livraison selon l'invention puisse comprendre plusieurs secteurs de livraison, répartis autour d'un ou de plusieurs bâtiments. De préférence, chaque secteur de livraison est toutefois associé à une seule issue de l'entrepôt.

Selon l'invention, chaque emplacement de livraison 18 est équipé d'une borne 13 dite borne d'identification. La borne est agencée, de façon inamovible, sur un côté de l'emplacement, de façon à pouvoir être accessible par le conducteur d'un véhicule garé sur l'emplacement. La zone 9 de livraison et la voie 8 de circulation sont aménagées de telle sorte qu'un véhicule ne puisse s'engager sur un emplacement de livraison 18 que dans un sens. Le côté de l'emplacement sur lequel se retrouve le conducteur est donc toujours le même.

Chaque borne d'identification 13 comprend un lecteur optique 30 de codes à barres. Chaque borne d'identification 13 est reliée à un système informatique de la plateforme de livraison, dit système de gestion des livraisons, par l'intermédiaire d'un réseau de communication privé. Chaque borne d'identification 13 comprend également un panneau 31 pour l'affichage d'instructions à l'intention des clients. Chaque borne d'identification 13 est identifiée par une référence d'emplacement (par exemple un numéro d'emplacement), propre à ladite borne, mémorisée dans une mémoire du système de gestion des livraisons (comme expliqué plus loin).

Il est noter que le lecteur optique 30 de codes à barres fait également office de lecteur de cartes de fidélité de la plateforme de livraison. A cette fin, chaque carte de fidélité présente un code à barres imprimé sur l'une de ses faces. Ce code est propre à ladite carte. Il permet d'identifier la carte et par conséquent le client qui en est titulaire. Il constitue un code client selon l'invention. Le code de chaque carte de fidélité délivrée par la plateforme de livraison est mémorisé dans une mémoire du système de gestion des livraisons.

En variante ou en combinaison, chaque borne d'identification 13 pourrait également comprendre :
- un clavier (ou écran tactile), qui permettrait à un client de taper des données saisies telles qu'un code de commande ou un code client ;
- un interphone, relié à l'entrepôt et commandé par un bouton ; cet interphone permettrait à un client d'appeler un opérateur de l'entrepôt et éventuellement de s'identifier en dictant un code de commande ou un code client audit opérateur ; cet interphone pourrait être utilisé par le client en cas d'incompréhension de sa part quant aux opérations (présentation de son ticket de commande, de sa carte de fidélité, de son téléphone mobile...) qu'il doit effectuer pour s'identifier, ou en cas de dysfonctionnement du lecteur optique 30 de codes à barres ou du réseau de communication entre les bornes d'identification et le système de gestion des livraisons ;
- un lecteur de cartes bancaires, qui permettrait à un client, en insérant sa carte bancaire dans ledit lecteur, de fournir son numéro de carte ou une partie de celui-ci à titre de code client ; de façon générale, tout lecteur de cartes (lecteur de pistes magnétiques, lecteur de puces électroniques, lecteur optique de codes et/ou graphismes et/ou texte...) qui permettrait à un client, en exposant une carte audit lecteur, de fournir un code client l'identifiant ;
- une caméra ou un appareil photo agencé(e) de façon à pouvoir prendre une image de la plaque d'immatriculation d'un véhicule stationné sur l'emplacement de livraison, et des moyens de reconnaissance d'image aptes à reconnaître le numéro d'immatriculation apparaissant sur l'image, lequel numéro constitue un code client selon l'invention ;
- un outil de reconnaissance biométrique, tel qu'un lecteur optique apte à lire une empreinte digitale ou tout autre élément morphologique permettant d'identifier une personne.

La plateforme de livraison comprend également, dans sa zone d'accueil, une zone extérieure 11 de commande, comprenant des emplacements de stationnement 19 dits emplacements de commande. Chaque emplacement de commande est équipé d'une borne 12, dite borne de commande à véhicule, accessible au conducteur d'un véhicule garé sur l'emplacement. Chaque borne de commande 12 réalise un terminal de commande selon l'invention, permettant de saisir une commande d'article(s) à livrer. A cette fin, chaque borne 12 est reliée au système de gestion des livraisons et comprend :
- des moyens de saisie de commande comprenant un écran tactile 32, qui permet à un client de désigner les articles à livrer formant sa commande parmi une liste d'articles regroupant les articles disponibles à la livraison, et de clôturer sa commande. L'écran de la borne de commande permet notamment d'afficher les articles à livrer proposés par la plateforme de livraison et actuellement disponibles dans l'entrepôt. Ces articles sont classés selon une classification arborescente, par catégorie (épicerie salée, épicerie sucrée, boissons sans alcool, boissons alcoolisées, produits surgelés, droguerie et bazar, hygiène et parfumerie, produits bébé, animalerie, matériaux et outillage...), puis par type (par exemple, pour les boissons sans alcool : eau plate, eau gazeuse, eau aromatisée, sodas, jus de fruits, sirop...), puis par marque, puis par article. L'affichage sur l'écran 32 de la borne de commande reproduit cette classification arborescente, qui facilite pour le client la recherche des articles qu'il souhaite acheter. Pour ajouter un article à sa commande, le client sélectionne l'article (en exerçant une pression sur l'image de l'article apparaissant à l'écran) puis confirme son choix, par exemple en appuyant sur une icône « ajouter à ma commande ». Une pression exercée sur une icône « terminer la commande » lui permet de clôturer la liste des articles commandés. L'écran tactile 32 peut être remplacé par un écran et un clavier. En variante ou en combinaison, les moyens de saisie de commande de la borne peuvent comprendre un microphone enregistreur ;
- un lecteur optique 33 de codes et/ou de texte et/ou de graphismes, à titre de lecteur de cartes de fidélité de la plateforme de livraison ; en l'exemple illustré, il s'agit d'un lecteur de codes à barres ;
- un terminal 34 de paiement électronique par cartes bancaires, qui réalisent des moyens de paiement aptes à recevoir et enregistrer, pour chaque commande, un paiement du montant total d'achat des articles commandés ; le système de gestion des livraisons réalise également un système d'encaissement ;
- des moyens d'impression comprenant une imprimante 35, permettant d'imprimer d'une part des tickets de carte bancaire, et d'autre part des tickets de commande, sur chacun desquels apparaissent une liste des articles à livrer commandés (laquelle liste comprend par exemple un libellé et le prix de vente de chaque article commandé), le montant total de la commande et le code de commande attribué à ladite commande par le système de gestion des livraisons (comme décrit plus loin). Le code de commande est imprimé sous la forme d'un code à barres. De préférence, chaque code de commande attribué par le système de gestion des livraisons est un code normalisé de type EAN 128 (en variante, il peut s'agir d'un code de type EAN 8 ou EAN 13) ;
- un interphone 36 relié à l'entrepôt, et qui permet au client d'appeler un opérateur de l'entrepôt en cas de problème.

La zone 11 de commande s'ouvre sur la voie de circulation 8, pour permettre à chaque client ayant effectué une commande à une borne 12 de commande à véhicule de rejoindre la zone 9 de livraison.

Des bornes de commande à véhicule, identiques aux bornes 12, sont avantageusement installées dans des lieux accessibles (en véhicule) au public en dehors de la zone d'accueil de la plateforme de livraison. Par ailleurs, des bornes de commande à pied, identiques aux bornes 12 (mais qui ne sont pas associées à un emplacement de stationnement de véhicule), peuvent également être installées dans la zone d'accueil de la plateforme de livraison ou en dehors de celle-ci.

Dans l'exemple illustré, la plateforme de livraison comprend également, dans sa zone d'accueil, un magasin 1 dans lequel sont aménagés d'une part des rayonnages 20, pour l'exposition et le stockage d'articles, et d'autre part des terminaux de caisse 10, agencés en bordure du magasin. Les rayonnages 20 forment entre eux des allées dans lesquelles peuvent circuler des clients et leur chariot éventuel. Ces rayonnages reçoivent des articles, dits articles à emporter, accessibles aux clients de façon à pouvoir être directement pris et transportés par ces derniers jusqu'à un terminal de caisse en vue de leur achat. Ils reçoivent également des modèles d'exposition d'articles disponibles uniquement auprès de l'entrepôt.

Par ailleurs, chaque terminal de caisse 10 réalise un terminal de commande selon l'invention, comprenant des moyens de saisie d'une commande d'article(s) à livrer, parmi lesquels, en combinaison avec une unité centrale de traitement : un écran tactile (ou un clavier et un écran), un lecteur optique de codes à barres (ou autre lecteur optique de codes et/ou de texte et/ou de graphismes), des moyens de communication de données (filaires ou sans fil) entre l'unité centrale de traitement du terminal de caisse et un lecteur optique de codes à barres (ou autre lecteur optique de codes et/ou de texte et/ou de graphismes) portatif mobile, dit scanner client, indépendant du terminal de caisse. Chaque terminal de caisse comprend également un comptoir sur lequel peuvent être déposés des articles à emporter pris dans le magasin, des moyens de paiement (terminal de paiement électronique par cartes bancaires, scanner/imprimante de chèques, tiroir caisse recevant des espèces...), des moyens d'impression comprenant une imprimante de tickets de caisse, etc..

Selon l'invention, la saisie d'une commande d'un client par un hôte de caisse à un terminal de caisse du magasin peut s'effectuer de plusieurs façons :
- l'hôte de caisse saisit la commande du client comme précédemment expliqué pour les bornes de commande, à l'aide de l'écran tactile du terminal de caisse (ou de son clavier). Les moyens de saisie de commande du terminal de caisse sont dans ce cas essentiellement constitués par l'écran tactile dudit terminal ;
- l'hôte caisse dispose d'un catalogue papier listant les articles à livrer proposés par la plateforme de livraison. Pour chaque article à livrer que le client souhaite commander, l'hôte de caisse saisit et enregistre, dans le système de gestion des livraisons, un code d'identification de l'article indiqué sur le catalogue. La saisie de ce code peut être effectuée à l'aide du lecteur optique de codes à barres du terminal de caisse si le code est imprimé sur le catalogue sous la forme d'un code à barres. En variante, cette saisie est effectuée à l'aide du clavier (ou de l'écran tactile) du terminal de caisse ;
- pour chaque article à livrer, le client recueille, dans le magasin, un code d'identification de l'article dit code article livré. Pour ce faire, le client s'empare par exemple d'un ticket distribué dans la zone d'exposition de l'article (zone où sont stockés des exemplaires de l'article à emporter, ou zone où est stocké un modèle d'exposition dudit article) ou à une borne centrale du magasin ; sur ce ticket est imprimé le code article livré dudit article, sous la forme d'un code à barres. En variante, il saisit ledit code article livré, porté par une affichette agencée dans la zone d'exposition de l'article, à l'aide d'un scanner client qui lui a été remis à l'entrée du magasin. Le code article livré saisi est enregistré dans une mémoire dudit scanner (si toutefois ce dernier en comporte une) ou est directement enregistré dans une commande mémorisée dans le système de gestion des livraisons auquel le scanner client est relié en permanence par des moyens de communication de données sans fil. Lorsque le client passe en caisse, l'hôte de caisse enregistre dans le terminal de caisse l'ensemble des codes article livré recueillis par le client dans le magasin. Pour ce faire, il saisit, à l'aide du lecteur optique de codes à barres du terminal de caisse, le code imprimé sur chaque ticket récupéré par le client ; les moyens de saisie de commande du terminal de caisse sont dans ce cas essentiellement constitués par le lecteur optique de codes à barres dudit terminal de caisse. En variante, si le client a utilisé un scanner client, l'hôte de caisse met en communication le scanner client et le terminal de caisse en vue, soit de décharger, à destination du terminal de caisse, les codes article livré enregistrés dans le scanner client, soit d'identifier ledit scanner client pour retrouver la commande correspondante mémorisée dans le système de gestion des livraisons. Les moyens de saisie de commande du terminal de caisse sont dans ce cas essentiellement constitués par des moyens de communication de données entre chaque scanner client et l'unité centrale du terminal de caisse.

Les moyens d'impression du terminal de caisse sont avantageusement adaptés pour imprimer, pour chaque commande saisie, un ticket de commande comportant au moins le code de commande de ladite commande, sous la forme d'un code à barres. De préférence, ce ticket de commande comporte également une liste du ou des articles à livrer commandés (avec le libellé et le prix de vente de chaque article), le montant total de la commande et le montant total des achats effectués par le client (article(s) à livrer + article(s) à emporter).

L'entrepôt comprend, outre la réserve 2 d'articles à livrer, une réserve 5 d'articles à emporter, réservée au stockage des articles destinés à être placés en magasin et pris dans le magasin par les clients. Cette réserve 5 communique directement avec le magasin 1 par de larges ouvertures permettant le passage d'engins automobiles de manutention, chargés d'articles. La réserve 5 comprend un premier local 16 pour le stockage des articles frais et surgelés à emporter, et un deuxième local 17 pour le stockage des articles non frais à emporter (dans l'exemple illustré, chaque local communique avec le magasin).

L'entrepôt comprend également une zone 6 de réception des articles livrés par les fournisseurs de la plateforme de livraison. Cette zone est utilisée pour stocker momentanément les articles livrés, avant leur affectation et leur stockage soit dans la réserve 2 d'articles à livrer, soit dans la réserve 5 d'articles à emporter. Cette zone 6 communique, par de larges ouvertures, avec l'extérieur de l'entrepôt pour la réception des articles, avec la réserve 5 d'articles à emporter pour le stockage des articles reçus destinés à la vente à emporter en magasin, et avec la réserve 2 d'articles à livrer pour le stockage des articles reçus destinés à la livraison aux clients. Il est également prévu, à toutes fins utiles, que la réserve 5 d'articles à emporter et la réserve 2 d'articles à livrer communiquent avec l'extérieur de l'entrepôt par de larges ouvertures.

Le système de gestion des livraisons comprend un site internet, dit site de commande, permettant de saisir des commandes depuis un ordinateur personnel connecté sur Internet. Dans l'exemple non limitatif décrit ici, seuls les clients disposant d'une carte de fidélité de la plateforme de livraison sont autorisés à passer des commandes depuis leur ordinateur personnel. Lors d'une première visite du site, le client est invité à saisir son nom et le code client de sa carte de fidélité. Un cookie est alors installé dans l'ordinateur personnel du client par le système de gestion des livraisons, en vue de permettre audit système d'établir un lien entre ledit code client et ledit ordinateur à chaque connexion ultérieure de l'ordinateur au site de commande.

Le système informatique de gestion des livraisons comprend également de préférence :
- un site informatique central, auquel chaque terminal de commande est relié par un réseau de communication. Ce site informatique central peut être formé d'un seul poste informatique, situé dans la zone d'accueil de la plateforme de livraison (par exemple dans l'entrepôt) ou au contraire distant de celle-ci. En variante, il est formé de plusieurs postes informatiques communiquant via un réseau, lesquels postes peuvent être regroupés dans un même lieu, qui peut être situé dans la zone d'accueil de la plateforme de livraison (et notamment dans l'entrepôt) ou à distance de cette zone, ou répartis dans des lieux distincts. Chaque terminal de commande (borne de commande, terminal de caisse du magasin, ordinateur personnel) est relié au site informatique central par un réseau de communication privé ou public tel qu'Internet, selon le terminal concerné, sa localisation, etc.. Le choix d'une architecture est effectué, de façon traditionnelle, en fonction de la puissance de calcul et de mémoire nécessaire, des possibilités de communication et de réseau offertes, des commodités de travail, des conséquences en terme de coûts et d'investissement matériels, logiciels et humains ;
- au moins deux terminaux dits terminaux de préparation de commande, dont un terminal dit terminal de local à température ambiante, rattaché au local 4 à température ambiante, et un terminal dit terminal de local réfrigéré, rattaché au local réfrigéré 3. Le terme "rattaché" signifie que chaque terminal est soit localisé dans le local concerné s'il s'agit d'un terminal fixe, soit affecté audit local s'il s'agit d'un terminal portatif mobile. A noter que chaque terminal de préparation de commande est de préférence un terminal sans fil portatif mobile, porté soit par un préparateur de commande, soit par un chariot permettant de réunir et transporter les articles d'une commande. Selon le volume de commandes et de livraisons qu'elle traite quotidiennement, la plateforme de livraison comprend un ou plusieurs terminaux de préparation de commande par local ;
- au moins un terminal, dit terminal de livraison, rattaché à la zone 14 de préparation des livraisons. De préférence, chaque terminal de livraison est un terminal sans fil portatif mobile, porté soit par un livreur, soit par un chariot permettant de réunir et de transporter les articles d'une commande. A noter que chaque terminal porté par un chariot est à la fois un terminal de préparation de commande et un terminal de livraison (le chariot étant utilisé à la fois pour préparer la commande et pour la livrer au client, et étant de ce fait alternativement rattaché à un local de stockage 3 ou 4 et à la zone 14 de préparation des livraisons). Selon le volume de commandes et de livraisons qu'elle traite quotidiennement, la plateforme de livraison comprend un ou plusieurs terminaux de livraison ;
- une base de données relationnelle, mémorisée dans une mémoire de masse du site informatique central, et un système de gestion de cette base de données, pour la gestion des approvisionnements, stocks, ventes et livraisons des articles. Cette base de données comprend généralement au moins une table ARTICLES, dans laquelle sont listés tous les articles proposés à la vente par la plateforme de livraison. Cette table ARTICLES comprend, pour chaque article proposé à la vente, un enregistrement comportant au moins un champ réservé au libellé de l'article, un champ réservé à un code d'identification de l'article, un champ réservé à son prix de vente. La table ARTICLES comprend également, pour chaque article proposé à la livraison, un champ réservé au code article livré dudit article. La base de données comprend également une table RESERVE D'ARTICLES À LIVRER, comprenant, pour chaque article proposé à la livraison, un enregistrement comportant au moins un champ réservé au code article livré de l'article, un champ (dit champ stock) réservé au nombre d'exemplaires de l'article présents dans la réserve 2 d'articles à livrer. Le système de gestion des livraisons est adapté pour mettre automatiquement à jour le champ stock pour les articles concernés à chaque encaissement à un terminal de commande (par exemple dès que le paiement correspondant est enregistré au terminal de commande) ou à chaque livraison. La base de données selon l'invention comprend également une table EMPLACEMENTS DE LIVRAISON comprenant, pour chaque borne d'identification, un enregistrement comportant au moins un champ réservé à la référence d'emplacement de ladite borne d'identification, un champ réservé à une adresse de ladite borne dans le réseau de communication liant les bornes au système de gestion des livraisons. La base de données selon l'invention comprend également une table CLIENTS comprenant, pour chaque client connu de la plateforme de livraison, un enregistrement comportant au moins un champ réservé au nom du client, des champs réservés à des codes client du client, et notamment un champ réservé au code de sa carte de fidélité, un champ réservé à une partie de son numéro de carte bancaire, un champ réservé au numéro d'immatriculation de son véhicule. La base de données selon l'invention comprend également une table COMMANDES comprenant, pour chaque commande saisie à un terminal de commande, un enregistrement comportant au moins un champ réservé au code de commande de ladite commande, un champ réservé à un code client saisi lors de la commande, des champs réservés aux codes article livré des articles commandés et aux nombres d'exemplaires des articles commandés.

Le système de gestion des livraisons est adapté pour, lorsqu'une commande a été saisie à l'un quelconque des terminaux de commande de la plateforme de livraison (borne 12 de commande à véhicule, terminal de caisse 10, borne de commande à pied) ou sur un ordinateur personnel relié au système de gestion de livraisons par un réseau de communication public ou privé, et que cette commande a été payée de préférence par l'intermédiaire de ce terminal de commande :
- attribuer un code de commande à ladite commande;
- mémoriser, dans la table COMMANDES, un enregistrement correspondant à la commande et comprenant ledit code de commande, les codes article livré des articles commandés et les nombres d'exemplaires correspondants ; cet enregistrement comprend également, le cas échéant, un code client qui a été saisi lors de la commande (il peut s'agir, par exemple, du code d'une carte de fidélité que le client a exposée au lecteur de cartes du terminal de commande) ou un autre code (inconnu du système) lu par un lecteur de cartes du terminal de commande ;
- communiquer le code de commande au client. Pour ce faire,
   ■ lorsque la commande a été saisie à un terminal de commande de la plateforme de livraison, le système de gestion des livraisons est adapté pour commander l'impression, par les moyens d'impression dudit terminal, d'un ticket de commande portant ledit code de commande, sous la forme d'un code à barres ; de préférence, ce ticket de commande est imprimé pour toute commande saisie audit terminal de commande, que le client dispose ou non d'une carte de fidélité de la plateforme de livraison ; il est à noter toutefois que, dans le cas où le client dispose d'une telle carte de fidélité et où il l'a exposée au lecteur de cartes du terminal lors de sa commande, ce ticket pourrait ne pas être imprimé, le client pouvant être identifié à l'entrepôt à l'aide de sa carte de fidélité,
   ■ lorsque la commande a été saisie sur un ordinateur personnel, un message contenant le code de commande est envoyé au client sur le site de commande ou à son adresse électronique ; toutefois, dans la mesure où seuls les clients disposant d'une carte de fidélité sont autorisés à passer des commandes depuis leur ordinateur personnel, il est également rappelé au client, dans le cadre de ce message, qu'il n'est pas nécessaire qu'il relève le code de commande (ce code pourrait même ne pas être communiqué au client) ; il lui suffit de se munir de sa carte de fidélité et de la présenter lors du retrait des articles commandés pour pouvoir être identifié ;
- trier les articles à livrer de la commande, d'une part en fonction de leur local de stockage (articles frais et surgelés d'un côté, articles non frais de l'autre), et d'autre part en fonction de leur localisation au sein du local (les articles sont classés en fonction du plan d'entreposage du local et d'un cheminement type d'un préparateur de commande dans le local), en vue de faciliter la préparation de la commande. Si la commande comporte un ou plusieurs articles frais ou surgelés et un ou plusieurs articles non frais, deux listes d'article(s) sont ainsi établies, l'une destinée au local réfrigéré et l'autre destinée au local à température ambiante ;
- transmettre chaque liste établie, avec le code de commande, à un terminal de préparation de commande du local concerné. Chaque liste est tout d'abord allouée à un préparateur de commande (ou à un chariot si les terminaux de préparation de commande sont portés par des chariots) puis est transmise au terminal dudit préparateur (ou dudit chariot).

Chaque préparateur de commande regroupe les articles de la liste qu'il a reçue, dans des paquets qu'il place dans un(ou plusieurs) conteneur(s) porté(s) par un chariot. A noter que chaque préparateur de commande dispose pour ce faire d'un lecteur optique de codes à barres portatif, qui lui permet de scanner le code article livré de chaque article qu'il prend dans les rayons de la réserve et met en paquet. A chaque fois qu'un code article livré est ainsi scanné, l'article correspondant disparaît de la liste des articles à préparer, laquelle liste apparaît sur le terminal de préparation de commande du préparateur. Si un article est pris à tort (article non présent dans la liste), un signal d'erreur (de préférence sonore) est émis par le terminal de préparation de commande. Par ailleurs, le préparateur de commande affecte chaque conteneur utilisé à ladite commande. Pour ce faire, chaque conteneur porte un code d'identification, dit code conteneur, sous la forme d'un code à barres. Par ailleurs, la base de données selon l'invention comprend une table CONTENEURS DES COMMANDES, comprenant, pour chaque commande enregistrée, un enregistrement comportant au moins un champ réservé au code de commande de la commande, et des champs réservés aux codes conteneur des conteneurs affectés à ladite commande. Pour affecter un conteneur à la commande qu'il est en train de préparer, le préparateur de commande scanne, à l'aide de son lecteur optique, le code conteneur que porte ledit conteneur. Le système de gestion de base de données est alors adapté pour créer ou compléter un enregistrement correspondant de la table CONTENEURS DES COMMANDES.

Le préparateur de commande apporte ensuite le(ou les) conteneur(s) avec les paquets qu'il a préparés dans la zone 14 de préparation des livraisons ou dans une zone d'attente du local (notamment s'il s'agit du local réfrigéré, les articles frais et surgelés ne devant être sortis du local qu'au dernier moment).

Le client se présente dans la zone de livraison 9 et stationne son véhicule sur l'un quelconque des emplacements disponibles. Il signale sa présence auprès de l'entrepôt de stockage. Pour ce faire, il présente devant le lecteur optique 30 de codes à barres de la borne 13 de l'emplacement choisi, soit le code à barres imprimé sur son ticket de commande, soit le code à barres imprimé sur sa carte de fidélité. Le code ainsi saisi, qui constitue des données saisies selon l'invention, est transmis au système de gestion des livraisons par la borne d'identification. En utilisant la table EMPLACEMENTS DE LIVRAISON, et à l'aide de l'adresse réseau de la borne d'identification ayant transmis le code saisi que le système de gestion des livraisons vient de recevoir, le système de gestion de base de données détermine la référence d'emplacement de ladite borne. Il vérifie ensuite si le code saisi reçu est un code de commande mémorisé dans la table COMMANDES. Si tel est le cas, il établit un lien entre la référence d'emplacement déterminée et ledit code de commande. Si le code saisi reçu n'est pas un code de commande mémorisé dans la table COMMANDES, le système de gestion de base de données vérifie si ce code saisi reçu est un code client mémorisé dans ladite table COMMANDES. Si tel est le cas, il établit un lien entre la référence d'emplacement déterminée et le code de commande mémorisé dans le même enregistrement (c'est-à-dire dans la même ligne) de ladite table. Si le code saisi reçu n'est pas un code client mémorisé dans la table COMMANDES, le système de gestion de base de données vérifie si ce code saisi reçu est un code client mémorisé dans la table CLIENTS. Si tel est le cas, il compare les autres codes client du client (autres codes client du même enregistrement -c'est-à-dire de la même ligne- de la table CLIENTS) aux codes client mémorisés dans la table COMMANDES. Si l'un des codes client du client correspond à un code client de la table COMMANDES, il établit un lien entre la référence d'emplacement préalablement déterminée et le code de commande mémorisé dans le même enregistrement (c'est-à-dire dans la même ligne) de ladite table COMMANDES. Si aucun des codes client mémorisés dans la table COMMANDES ne correspond aux codes client du client, il émet un message d'erreur (comprenant la référence d'emplacement), qu'il transmet par exemple à un terminal de livraison ; le livreur recevant ce signal est invité à se rendre à l'emplacement de livraison identifié en vue de traiter directement avec le client pour tenter de retrouver sa commande, si elle existe.

Dans le cas où un lien a été établi entre la référence d'emplacement et une commande (identifiée par son code de commande), le système de gestion de base de données extrait, de la table CONTENEURS DES COMMANDES, le code conteneur de chaque conteneur affecté à la commande, à partir du code de commande. Le système de gestion des livraisons sélectionne ensuite un livreur et transmet à son terminal de livraison un message comprenant le code de commande, la référence d'emplacement associée et le code conteneur de chaque conteneur affecté à la commande. Le livreur est ainsi informé que le client (dont le code de commande apparaît sur son terminal) est arrivé dans la zone de livraison et attend sa commande à l'emplacement susmentionné (dont la référence d'emplacement s'affiche sur son terminal). Le livreur regroupe alors les conteneurs affectés à la commande provenant des deux locaux, et apporte ces conteneurs à l'emplacement de livraison. Il charge les paquets présents dans les conteneurs dans le véhicule du client.

Il va de soi que l'invention peut faire l'objet de nombreuses variantes par rapport au mode de réalisation décrit et illustré.

En particulier, le système de gestion des livraisons peut être adapté pour :
- mémoriser, pour chaque client, d'autres codes client que le code de la carte de fidélité dudit client, tels qu'une partie du numéro d'une carte bancaire du client, son numéro d'identité, le numéro d'immatriculation de son véhicule,une image d'un élément morphologique du client, etc.,
- lorsqu'un client est identifié à un terminal de commande par l'un de ses codes client, associer, à la commande enregistrée pour ce client, chacun des codes client mémorisés pour le client,
- lorsque l'un quelconque des codes client dudit client (qui peut être différent du code client qui a permis d'identifier le client au terminal de commande) est saisi à une borne d'identification, associer ladite commande à la référence d'emplacement de ladite borne.

Il est à noter que, dans le cas où un client est identifié par un code client au terminal de commande où il passe sa commande, le code de commande attribué par le système de gestion des livraisons pourrait éventuellement être ce code client. Toutefois, un tel procédé n'est pas recommandé dans une plateforme de livraison (telle qu'un espace de vente de la grande distribution) où la possibilité est laissée aux clients d'établir une nouvelle commande sans avoir encore retirer leur précédente commande.

Enfin, le système de gestion des livraisons peut être réalisé par des moyens informatiques logiciels et matériels différents de ceux du mode de réalisation préférentiel décrit précédemment. En particulier, l'architecture de sa base de données peut être totalement différente de celle décrite, dès lors qu'elle permet au système de gestion des livraisons d'exécuter les fonctionnalités définies selon l'invention. En particulier, cette architecture peut être en totalité ou partie réalisée par des fichiers à la place de tables. Par ailleurs, la référence d'emplacement peut être l'adresse réseau de la borne d'identification. En outre, le système de gestion des livraisons peut être réalisé par des modules informatiques (matériels et logiciels) autonomes différents de ceux du système d'encaissement des terminaux de commande.

## Revendications

1. Plateforme de livraison d'articles à des clients utilisant un véhicule, comprenant :
- un entrepôt de stockage (2) dans lequel sont stockés des articles à livrer,
- un système informatique de gestion des livraisons,
- une zone de livraison (9) comprenant des emplacements de livraison (18), chaque emplacement de livraison étant accessible par au moins une voie carrossable (8) et étant adapté pour recevoir un unique véhicule, chaque emplacement de livraison étant aménagé à proximité d'une issue (15) de l'entrepôt de façon à permettre, via cette issue, la livraison d'une commande d'article(s) à livrer dans un véhicule stationné sur l'emplacement de livraison, chaque emplacement de livraison (18) comprenant une borne d'identification (13) fixée inamovible à proximité immédiate de l'emplacement de livraison et reliée au système de gestion des livraisons,
**caractérisée en ce que** :
- le système de gestion des livraisons est adapté pour pouvoir activer et désactiver chaque borne d'identification (13),
- chaque borne d'identification (13) est adaptée pour permettre, lorsqu'elle est active, la saisie de données numériques, dites données saisies, représentatives d'une commande d'article(s) à livrer préalablement saisie sur un terminal de commande situé en dehors de la zone de livraison et préalablement payée à l'aide de moyens de paiement situés en dehors de la zone de livraison,
- le système de gestion des livraisons comprend, pour chaque borne d'identification, des données numériques mémorisées, dites référence d'emplacement, identifiant cette borne d'identification et donc l'emplacement de livraison correspondant,
- le système de gestion des livraisons est adapté pour détecter la saisie de données saisies sur une borne d'identification active, et associer la référence d'emplacement de cette borne d'identification à une commande d'article(s) à livrer correspondant auxdites données saisies.

2. Plateforme selon la revendication 1, **caractérisée en ce que** chaque borne d'identification (13) est dépourvue de moyens de saisie de commandes et de moyens de paiement de commandes.

3. Plateforme selon l'une des revendications 1 ou 2, **caractérisée en ce que** :
- le système de gestion des livraisons est adapté pour mémoriser, pour chaque commande d'article(s) à livrer, des données numériques, dites code de commande, identifiant cette commande,
- le système de gestion des livraisons est adapté pour associer la référence d'emplacement d'une borne d'identification où des données saisies ont été saisies, au code de commande de la commande d'article(s) à livrer correspondant auxdites données saisies.

4. Plateforme selon la revendication 3, **caractérisée en ce que** :
- chaque borne d'identification (13) est adaptée pour permettre la saisie d'un code de commande à titre de données saisies,
- le système de gestion des livraisons est adapté pour reconnaître un code de commande saisi sur une borne d'identification.

5. Plateforme selon l'une des revendications 1 à 4, **caractérisée en ce que** :
- le système de gestion des livraisons comprend au moins une série, dite code client, de données numériques mémorisées identifiant un client,
- le système de gestion des livraisons est adapté pour associer chaque code client d'un client à une commande enregistrée pour le client,
- chaque borne d'identification (13) est adaptée pour permettre la saisie d'un code client à titre de données saisies, et le système de gestion des livraisons est adapté pour reconnaître un code client saisi sur une borne d'identification.

6. Plateforme de livraison selon l'une des revendications 1 à 5, **caractérisée en ce que** chaque borne d'identification (13) comprend au moins un dispositif de saisie de données numériques choisi parmi un lecteur optique (30) de codes et/ou de texte et/ou de graphismes, un lecteur de cartes magnétiques, un lecteur de cartes à puce, un clavier, un écran tactile, un interphone, une caméra, un appareil photo, un outil de reconnaissance biométrique.

7. Plateforme de livraison selon l'une des revendications 1 à 6, **caractérisée en ce qu'**elle comprend au moins un terminal de commande (12, 10), situé en dehors de la zone de livraison, relié au système de gestion des livraisons et adapté pour être utilisé par un client ou par une personne de la plateforme de livraison pour saisir une commande d'article(s) à livrer.

8. Plateforme de livraison selon les revendications 3 et 7, **caractérisée en ce que** le système de gestion des livraisons est adapté pour mémoriser un code de commande pour chaque commande d'article(s) à livrer saisie à un terminal de commande.

9. Plate forme de livraison selon l'une des revendications 7 ou 8, **caractérisée en ce qu'**elle comprend des emplacements de commande (19), situés en dehors de la zone de livraison, chaque emplacement de commande étant accessible par au moins une voie carrossable (8) et étant adapté pour recevoir un unique véhicule, chaque emplacement de commande comprenant un terminal de commande (12) formé d'une borne de commande adaptée pour être utilisée par un client à bord d'un véhicule stationné sur l'emplacement de commande.

10. Plateforme de livraison selon l'une des revendications 7 à 9, **caractérisée en ce qu'**elle comprend un local (1), dit magasin, accessible à des clients et dans lequel des articles sont stockés de façon à être exposés aux clients, ledit magasin comprenant au moins un terminal de caisse (10) relié au système de gestion des livraisons et doté de moyens de saisie d'une commande d'article(s) à livrer pour un client de sorte que ce terminal de caisse constitue un terminal de commande.

11. Plateforme de livraison selon l'une des revendications 7 à 10, **caractérisée en ce qu'**elle comprend au moins un terminal de commande formé d'une borne, dite borne de commande à pied, installée dans un lieu accessible à pied par des clients, en dehors de la zone de livraison.

12. Plateforme de livraison selon l'une des revendications 8 à 11, **caractérisée en ce que** chaque terminal de commande (12, 10) de la plateforme de livraison comprend des moyens (35) d'impression de tickets, adaptés pour imprimer, pour chaque commande saisie audit terminal de commande, un ticket de commande sur lequel apparaît le code de commande correspondant.

13. Plateforme de livraison selon la revendication 12, **caractérisée en ce que** lesdits moyens d'impression (35) sont adaptés pour imprimer chaque code de commande sous la forme d'un code à lecture optique, et **en ce que** chaque borne d'identification (13) est dotée d'un lecteur optique (30) apte à lire un tel code à lecture optique.

14. Plateforme de livraison selon l'une des revendications 7 à 13, **caractérisée en ce que** :
- le système de gestion des livraisons comprend au moins une série, dite code client, de données numériques mémorisées identifiant un client,
- chaque terminal de commande (10, 12) de la plateforme de livraison est adapté pour permettre la saisie d'un code client lors de la saisie d'une commande d'article(s) à livrer, en vue de permettre d'identifier le client passant ladite commande,
- le système de gestion des livraisons est adapté pour reconnaître un code client saisi à un terminal de commande et pour associer chaque code client du client ainsi identifié à une commande enregistrée pour ce client audit terminal de commande.

15. Plateforme de livraison selon l'une des revendications 8 à 14, **caractérisée en ce que** :
- chaque terminal de commande (10, 12) de la plateforme de livraison comprend un lecteur de cartes (33),
- le système de gestion des livraisons est adapté pour mémoriser, en association avec une commande, un code lu sur une carte par un lecteur de cartes d'un terminal de commande,
- chaque borne d'identification (13) est dotée d'un lecteur (30) de cartes compatibles avec le lecteur de cartes de chaque terminal de commande.

16. Plateforme de livraison selon l'une des revendications 8 à 15, **caractérisée en ce que** :
- chaque terminal de commande (10, 12) est adapté pour permettre la saisie d'un numéro de téléphone mobile lors de la saisie d'une commande d'article(s) à livrer,
- le système de gestion des livraisons est adapté pour mémoriser ledit numéro de téléphone mobile en association avec le code de commande de ladite commande, puis pour envoyer à ce numéro de téléphone mobile un message téléphonique comprenant ledit code de commande.

17. Plateforme de livraison selon l'une des revendications 8 à 16, **caractérisée en ce que** :
- le système de gestion des livraisons comprend d'une part au moins une série, dite code client, de données numériques mémorisées identifiant un client, et d'autre part des moyens de mémorisation, en association avec chaque code client, d'un numéro de téléphone mobile du client,
- chaque terminal de commande (10, 12) est adapté pour permettre la saisie d'un code client lors de la saisie d'une commande d'article(s) à livrer, en vue de permettre d'identifier le client passant ladite commande,
- le système de gestion des livraisons est adapté pour envoyer, au numéro de téléphone mobile du client identifié, un message téléphonique comprenant le code de commande de ladite commande.

18. Plateforme de livraison selon l'une des revendications 16 ou 17, **caractérisée en ce que** le système de gestion des livraisons est adapté pour envoyer un message téléphonique de type multimédia dans lequel le code de commande apparaît sous la forme d'un code à lecture optique, et **en ce que** chaque borne d'identification est dotée d'un lecteur optique de tels codes à lecture optique.

19. Plateforme de livraison selon l'une des revendications 7 à 18, **caractérisée en ce que** :
- chaque terminal de commande (10, 12) de la plateforme de livraison comprend un écran d'affichage (32),
- le système de gestion des livraisons comprend au moins une série, dite code client, de données numériques mémorisées identifiant un client,
- chaque terminal de commande est adapté pour permettre la saisie d'un code client lors de la saisie d'une commande d'article(s) à livrer, en vue de permettre d'identifier le client passant ladite commande,
- le système de gestion des livraisons comprend :
■ des moyens de mémorisation, en association avec chaque code client correspondant, de données numériques représentatives des différents articles à livrer de chaque commande saisie pour un client identifié,
■ des moyens de génération automatique, de mémorisation et de mise à jour, pour chaque client identifié, d'une liste d'articles, dits articles préférés du client, en fonction des articles précédemment livrés au client et de leur fréquence de livraison,
■ des moyens d'affichage de la liste d'articles préférés d'un client sur l'écran (32) d'un terminal de commande où ce client est identifié.

20. Plateforme de livraison selon l'une des revendications 7 à 19, **caractérisée en ce que** le système de gestion des livraisons est un système d'encaissement adapté pour permettre l'enregistrement et le paiement d'articles, et **en ce que** chaque terminal de commande (10, 12) de la plateforme de livraison comprend des moyens d'encaissement (34) permettant de recevoir et d'enregistrer, pour chaque commande saisie audit terminal de commande, un paiement correspondant à un montant d'achat des articles de cette commande.

21. Plateforme de livraison selon les revendications 8 et 20, **caractérisée en ce que** le système de gestion des livraisons est adapté pour n'attribuer un code de commande à une commande saisie à un terminal de commande (10, 12) qu'après enregistrement d'un paiement correspondant audit terminal de commande.

22. Plateforme selon l'une des revendications 3 à 21, **caractérisée en ce que** le système de gestion des livraisons est adapté pour communiquer chaque code de commande et/ou une liste comprenant chaque article composant la commande correspondante, à au moins un terminal, dit terminal de préparation de commande, rattaché à l'entrepôt.

23. Plateforme selon la revendication 22, **caractérisée en ce qu'**elle comprend au moins un terminal de préparation de commande portatif, adapté pour pouvoir être porté par un préparateur de commande ou par un chariot.

24. Plateforme selon l'une des revendications 1 à 23, **caractérisée en ce que** l'entrepôt présente une seule issue (15) desservant tous les emplacements de livraison (18).

25. Procédé de livraison d'articles à des clients utilisant un véhicule, dans lequel :
- on stocke des articles à livrer dans un entrepôt (2),
- on utilise un système informatique de gestion des livraisons,
- on utilise une zone de livraison (9) comprenant des emplacements de livraison (18), chaque emplacement de livraison étant accessible par au moins une voie carrossable (8) et étant adapté pour recevoir un unique véhicule, chaque emplacement de livraison étant aménagé à proximité d'une issue (15) de l'entrepôt de façon à permettre, via cette issue, la livraison d'une commande d'article(s) à livrer dans un véhicule stationné sur l'emplacement de livraison,
- on équipe chaque emplacement de livraison (18) d'une borne d'identification (13), fixée inamovible à proximité immédiate de l'emplacement de livraison et reliée au système de gestion des livraisons,
**caractérisé en ce que** :
- pour chaque borne d'identification (13), on mémorise, dans le système de gestion des livraisons, des données numériques, dites référence d'emplacement, identifiant cette borne d'identification et donc l'emplacement de livraison correspondant,
- on active la totalité ou une partie des bornes d'identification (13), le système de gestion des livraisons étant adapté pour pouvoir activer et désactiver chaque borne d'identification,
- chaque borne d'identification (13) implantée est adaptée pour permettre, lorsqu'elle est active, la saisie de données numériques, dites données saisies, représentatives d'une commande d'article(s) à livrer préalablement saisie sur un terminal de commande situé en dehors de la zone de livraison et préalablement payée à l'aide de moyens de paiement situés en dehors de la zone de livraison,
- on autorise chaque client à accéder à l'un quelconque des emplacements de livraison dont les bornes d'identification sont actives,
- lorsque des données saisies sont saisies sur une borne d'identification active, le système de gestion des livraisons détecte cette saisie et associe la référence d'emplacement de cette borne d'identification à une commande d'article(s) à livrer correspondant auxdites données saisies.

26. Procédé selon la revendication 25, **caractérisé en ce que** chaque borne d'identification (13) implantée est dépourvue de moyens de saisie de commandes et de moyens de paiement de commandes.

27. Procédé selon l'une des revendications 25 ou 26, **caractérisé en ce que** :
- pour chaque commande d'article(s) à livrer, le système de gestion des livraisons mémorise des données numériques, dites code de commande, identifiant cette commande,
- le système de gestion des livraisons associe la référence d'emplacement d'une borne d'identification où des données saisies ont été saisies, au code de commande de la commande d'article(s) à livrer correspondant auxdites données saisies.

28. Procédé selon la revendication 27, **caractérisé en ce que** :
- chaque borne d'identification (13) utilisée est adaptée pour permettre la saisie d'un code de commande à titre de données saisies,
- le système de gestion des livraisons utilisé est adapté pour reconnaître un code de commande saisi sur une borne d'identification.

29. Procédé selon l'une des revendications 25 à 28, **caractérisé en ce que** :
- on mémorise, dans le système de gestion des livraisons, au moins une série, dite code client, de données numériques identifiant un client,
- pour chaque commande enregistrée pour un client, le système de gestion de livraisons associe chaque code client dudit client à ladite commande,
- chaque borne d'identification (13) utilisée est adaptée pour permettre la saisie d'un code client à titre de données saisies, et le système de gestion des livraisons utilisé est adapté pour reconnaître un code client saisi sur une borne d'identification.

30. Procédé selon l'une des revendications 25 à 29, **caractérisé en ce que** chaque borne d'identification (13) utilisée comprend au moins un dispositif de saisie de données numériques choisi parmi un lecteur optique (30) de codes et/ou de texte et/ou de graphismes, un lecteur de cartes magnétiques, un lecteur de cartes à puce, un clavier, un écran tactile, un interphone, une caméra, un appareil photo, un outil de reconnaissance biométrique.
